(19) **Europäisches Patentamt**
**European Patent Office**
**Office européen des brevets**

(11) **EP 2 645 618 A1**

(12) **EUROPEAN PATENT APPLICATION**

(43) Date of publication:
**02.10.2013 Bulletin 2013/40**

(51) Int Cl.:
**H04L 9/08** *(2006.01)* **H04L 9/30** *(2006.01)*

(21) Application number: **12250082.0**

(22) Date of filing: **30.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **British Telecommunications Public Limited Company**
**London EC1A 7AJ (GB)**

(72) Inventor: **The designation of the inventor has not yet been filed**

(74) Representative: **Williamson, Simeon Paul**
**BT Group Legal**
**Intellectual Property Department**
**PP C5A, BT Centre**
**81 Newgate Street**
**London**
**EC1A 7AJ (GB)**

(54) **Method and system for network data access**

(57)    Embodiments of the invention provide a method and system which allow for ready revocation of end user access rights by virtue of storing data in an encrypted form in a network environment, and using a trusted proxy server to re-encrypt the data itself to permit eventual decryption of the data by an authorised end user. However, if the end user's access rights are revoked then the trusted proxy does not perform the re-encryption of the data, and the end user is not then able to subsequently decrypt data stored in the network environment, even if it is able to access the data without permission. Embodiments therefore have advantages that access control is decoupled from data confidentiality to provide scalability, and revocation of user access rights can be accomplished without requiring re-encryption of the stored data.

Figure 5

Figure 6

**Description**

Technical Field

The present invention relates to a method and system for providing access to data stored securely in a network environment. More specifically, embodiments of the invention relate to a method and system which use a trusted proxy server to re-encrypt the data to permit eventual decryption of the data by an authorised end user.

Background to the Invention and Prior Art

With the advent of "cloud computing", issues of data access and data confidentiality are becoming of more and more importance. In particular the provision of secure network file storage and access control to ensure that the right users can access the right files is critical to many organisations. Whilst historically "firewall" type solutions were employed, where access control to the actual storage systems themselves was implemented, in many cloud computing scenarios the storage systems themselves are untrusted, and it is therefore the ability to access data within such untrusted systems that is now of importance.

As described by G. Ateniese, K. Fu, M. Green, and S. Hohenberger in "Improved proxy re-encryption schemes with applications to secure distributed storage," in *Proc. of NDSS'05,* 2005, proxy re-encryption allows a proxy to transform a ciphertext computed under Alice's public key into one that can be opened by Bob's secret key. There are many useful applications of this primitive. For instance, Alice might wish to temporarily forward encrypted email to her colleague Bob, without giving him her secret key. In this case, Alice the delegator could designate a proxy to re-encrypt her incoming mail into a format that Bob the delegatee can decrypt using his own secret key. Alice could simply provide her secret key to the proxy, but this requires an unrealistic level of trust in the proxy. Instead, therefore, Alice computes a re-encryption key from Bob's public key, the re-encryption key being a function that converts incoming mail intended for Alice and encrypted with her public key into a form that permits decryption by Bob's private key. Alice then provides the re-encryption key to the proxy, which re-encrypts the incoming mail, and passes it to Bob. Bob can then decrypt the mail intended for Alice with his private key.

Several proxy re-encryption schemes are described in the Ateniese paper, specifically section 3 thereof, any details of which necessary for understanding the present invention being incorporated herein by reference. Ateniese *et al* also comment that proxy re-encryption has many exciting applications in addition to previous proposals for email forwarding, law enforcement, and performing cryptographic operations on storage-limited devices. In particular, according to Ateniese *et al.* proxy cryptography has application to secure network file storage, and they describe a specific file system which uses an untrusted access *control server* to manage access to encrypted files stored on distributed, untrusted block stores, and that uses proxy re-encryption to allow for access control without granting full decryption rights to the access control server.

In the Ateniese file system, end users on client machines wish to obtain access to integrity-protected, confidential content. A content owner publishes encrypted content in the form of a many-reader, single writer file system. The owner encrypts blocks of content with unique, symmetric *content keys.* A content key is then encrypted with an asymmetric master key to form a *lockbox.* The lockbox resides with the block it protects.

Untrusted block stores then make the encrypted content available to everyone. Users download the encrypted content from a block store, then communicate with an access control server to decrypt the lockboxes protecting the content. The content owner selects which users should have access to the content and gives the appropriate delegation rights to the access control server.

The content keys used to encrypt files are themselves securely encrypted under a master public key, using a unidirectional proxy re-encryption scheme of the form described in the Ateniese paper. Because the access control server does not possess the corresponding secret key, it cannot be corrupted so as to gain access to the content keys necessary to access encrypted files. The secret master secret key remains offline, in the care of a content owner who uses it only to generate the re-encryption keys used by the access control server. When an authorized user requests access to a file, the access control server uses proxy re-encryption to directly re-encrypt the appropriate content key(s) from the master public key to the user's public key.

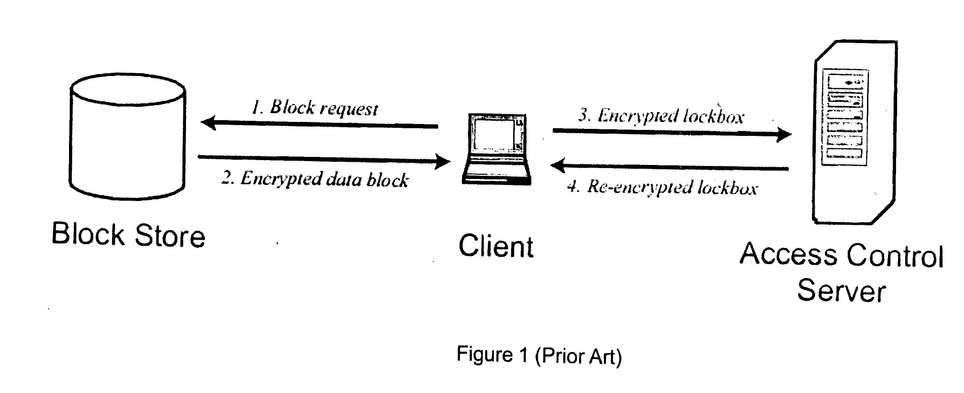

Operation of the proxy re-encryption file system of Ateniese is shown further in Figure 1. Here, the user's client machine fetches encrypted blocks from the block store. Each block includes a lockbox encrypted under the master public key. The client then transmits lockboxes to the access control server for re-encryption under the user's public key. If the access control server possesses the necessary re-encryption key, it re-encrypts the lockbox and returns the new ciphertext. The client can then decrypt the re-encrypted block with the user's secret key, to obtain the symmetric content key encrypted therein. The symmetric content key is then used to decrypt the content of the data block.

Ateniese *et al* therefore provide an access control server storage scheme where much of the security relies on the strength of a provably-secure cryptosystem, rather than on the trust of a server operator for mediating access control.

Because the access control server cannot successfully re-encrypt a file key to a user without possessing a valid delegation key, the access control server cannot be made to divulge file keys to a user who has not been specifically authorized by the content owner, unless this attacker has previously stolen a legitimate user's secret key.

However, Ateniese *et al* take absolutely no account of the issue of revocation of user access rights to the data. In their scheme, the symmetric content key that is used to encrypt the data stored in the block store is passed to the end user, via the proxy re- encrypted lock box. Once the end user has obtained the symmetric encryption key, it can then continue to access the data in the block store encrypted with this key (because the block store itself has no access control) . In order to prevent this access it would be necessary to re- encrypt the data in the block store. However, in this respect in typical cloud computing scenarios there would be numerous infrastructure providers all providing services to millions of data consumers. It is simply not possible to re- encrypt data every- time a user has his or her access revoked. This is because there would be many data consumers who would be having their access revoked in a very short span of time, and hence there would need to be more than one re- encryption operation taking place at once. It would therefore be very hard if not impossible to keep track of which data was encrypted with which key.

In view of the above, there is a still a clear need to provide data access control schemes for network stored data which are able to effectively control data access whilst taking into account the possibility for user access rights to be revoked.

Summary of the Invention

Embodiments of the present invention address the above noted problems by providing a method and system which allow for ready revocation of end user access rights by virtue of storing data in an encrypted form in a network environment, and using a trusted proxy server to re-encrypt the data itself (rather than, as in the prior art, an encryption key used to encrypt the data) to permit eventual decryption of the data by an authorised end user. However, if the end user's access rights are revoked then the trusted proxy does not perform the re-encryption of the data, and the end user is not then able to subsequently decrypt data stored in the network environment, even if it is able to access the data without permission. Embodiments therefore have advantages that access control is decoupled from data confidentiality to provide scalability, and revocation of user access rights can be accomplished without requiring re-encryption of the stored data.

In view of the above, from a first aspect an embodiment of the invention provides a method for use in accessing data from network data storage, the data being encrypted with one or more layers of encryption including an asymmetric encryption layer applied by the data owner. The method comprises receiving a request at an access control entity from a data consumer for access to data stored in the network data storage, and determining whether to grant the request in dependence on whether the data consumer has access rights to the requested data. A proxy re-encryption key generated by the data owner is obtained, and if it is determined that the data consumer may access the data, the requested data is obtained from the network data storage and proxy re-encrypted to enable subsequent decryption of the asymmetric encryption layer applied by the data owner in order to enable access to the data.

Therefore, embodiments of the invention make use of proxy re- encryption coupled with an access control mechanism to decouple data confidentiality from access control. Specifically, data confidentiality of data stored in the network data storage is maintained due to the asymmetric encryption applied thereto. This asymmetric encryption becomes removable (decryptable) by someone other than the data owner by proxy re- encrypting the data by a trusted proxy in response to a determination that a requesting data consumer is authorised to access the data. Without this proxy re- encryption, the requesting data consumer would not be able to decrypt the data, even if it had access to the encrypted file. Hence data confidentiality is maintained, even in the face of access to the encrypted data.

In one embodiment the re-encryption key re-encrypts the data so that the asymmetric encryption layer may be decrypted by the data consumer, the method further comprising sending the re-encrypted data to the data consumer. In this case re-encryption has as its target the data consumer itself, so that the data consumer may decrypt and remove the asymmetric encryption itself. Where the data has a single layer of encryption being the asymmetric layer, then in such a case the data consumer is able to decrypt the re-encrypted data to plaintext data to access the data.

In another embodiment the re-encryption key re-encrypts the data so that the asymmetric encryption layer may be decrypted by the trusted authority, the method further comprising, at the trusted authority, decrypting the asymmetric encryption layer. In this case the re-encryption has as its target the trusted authority itself, which after the re-encryption then undertakes decryption of the asymmetrically encrypted data to remove the asymmetric encryption. This is particularly useful where the data has at least two layers of encryption, being one or more first layers and the asymmetric layer, the decryption resulting in the data encrypted with the one or more first layers, because the trusted authority is able to proxy decrypt the data as part of a more extended process of total decryption, the remaining decryption then being performed by the authorised data consumer.

Specifically, in one embodiment the method further comprises sending the proxy decrypted data to the data consumer, the data consumer then obtaining the decryption key to decrypt the one or more first layers to obtain plaintext data from the data owner. As such, only the data consumer can get access to the plaintext data, and not the trusted authority.

In one embodiment the trusted authority requests the decryption key to decrypt the one or more first layers from the data owner, and forwards the decryption key to the data consumer. This allows the trusted authority to cache the received decryption key for the data consumer, so that it is not necessary to trouble the data owner with multiple key requests in the future.

From another aspect embodiments of the invention provide a method for use in storing data in network data storage. The method comprises encrypting data to be stored in the network data storage with one or more layers of encryption, including at least an asymmetric encryption layer, and storing the encrypted data in the network data storage. In addition a proxy re-encryption key is generated to allow a trusted authority to re-encrypt data encrypted with the asymmetric encryption layer so that the asymmetric encryption layer may be decrypted by a third party, and the proxy re-encryption key is sent to the trusted authority. With such an arrangement a data owner is able to ensure data confidentiality is maintained of the data stored in the network data storage, by virtue of the data encryption. However, the asymmetric encryption may be removed as part of a decryption process for an authorised data consumer by proxy re-encryption and subsequent decryption, performed specifically in response to a determination that a requesting user is authorised to access the data. Hence access control to the data is decoupled from data confidentiality.

In one embodiment the re-encryption key is generated so as to be able to re-encrypt the data such that the asymmetric encryption layer may be decrypted by the data consumer. As with the above aspect, in this case re-encryption has as its target the data consumer itself, so that the data consumer may decrypt and remove the asymmetric encryption itself. Where the data has a single layer of encryption being the asymmetric layer, then in such a case the data consumer is able to decrypt the re-encrypted data to plaintext data to access the data. In another embodiment the re-encryption key re-encrypts the data so that the asymmetric encryption layer may be decrypted by the trusted authority. Again, as with the first aspect, in this case the re-encryption has as its target the trusted authority itself, which after the re-encryption then undertakes decryption of the asymmetrically encrypted data to remove the asymmetric encryption. This is particularly useful where the data has at least two layers of encryption, being one or more first layers and the asymmetric layer, the decryption resulting in the data encrypted with the one or more first layers, because the trusted authority is able to proxy decrypt the data as part of a more extended process of total decryption, the remaining decryption then being performed by the authorised data consumer.

In the above embodiment, the method further comprises receiving a request for the decryption key or keys for the one or more first layers, and sending the keys in response to the request. Hence, the data consumer is able to obtain the decryption keys for the first layer of encryption from the data owner, to remove the one or more first layers of encryption to access the plaintext data.

From another aspect the invention provides a computer program or suite of computer programs so arranged such that when executed by a computer system it/they cause(s) the computer system to operate in accordance with the method of any of the above aspects. In addition, a further aspect also provides a computer readable medium storing a computer program or at least one of a suite of computer programs according to the above aspect.

A fifth aspect of the invention also provides a system, comprising: at least one processor; memory; and at least one computer readable medium storing a computer program or suite of computer programs so arranged such that when loaded into memory and executed by the processor they cause the system to operate in accordance with the method of any of the above aspects.

A further aspect of the invention provides an apparatus for use in accessing data from network data storage, the data being encrypted with one or more layers of encryption including an asymmetric encryption layer applied by the data owner, the apparatus comprising an input at which is received a proxy re-encryption key generated by the data owner, and, if it is determined that a data consumer that has requested access to data stored in the network data storage may access the data, the requested data from the network data storage; and an encryption controller arranged to, if it is determined that the data consumer may access the data, re-encrypt the data to enable subsequent decryption of the asymmetric encryption layer applied by the data owner whereby to enable access to the data.

A yet further aspect of the invention also provides an apparatus for use in storing data in network data storage, the apparatus comprising an encryption controller arranged to encrypt data to be stored in the network data storage with one or more layers of encryption, including at least an asymmetric encryption layer, a key generator arranged to generate a proxy re-encryption key to allow a trusted authority to re-encrypt data encrypted with the asymmetric encryption layer so that the asymmetric encryption layer may be decrypted by a third party, and a network interface arranged to store the encrypted data in the network data storage and to send the proxy re-encryption key to the trusted authority.

An even further aspect of the invention provides a method or system comprising a data owner, a data consumer, a trusted authority, and an infrastructure provider, wherein the data owner is arranged to encrypt data with one or more layers of encryption including an asymmetric layer, and to store the encrypted data with the infrastructure provider; the data consumer requesting access to the encrypted data, the trusted authority determining if the data consumer is permitted access to the data, and if so, obtaining the encrypted data and re-encrypting it with a proxy re-encryption key provided by the data owner, wherein the proxy re-encryption permits the asymmetric encryption layer to be removed by a third party other than the data owner as part of a decryption process of the encrypted data for the authorised data consumer.

Brief Description of the Drawings

Further features and advantages of embodiments of the present invention will become apparent from the following description of embodiments thereof, presented by way of example only, and with reference to the accompanying drawings, wherein like reference numerals refer to like parts, and wherein:

Figure 1 is a block diagram of the Ateniese *et al.* scheme of the prior art;

Figure 2 is a block diagram of the various actors of embodiments of the invention;

Figure 3 is a matrix diagram used to explain the security provided by embodiments of the invention;

Figure 4 is a block diagram of an actor of an embodiment of the invention;

Figure 5 is a process diagram of a set-up phase of a first embodiment of the invention;

Figure 6 is a process diagram of a data access phase of the first embodiment;

Figure 7 is an access matrix illustrating the various data that may be accessed by actors in the first embodiment of the invention;

Figure 8 is a process diagram of a set-up phase in a second embodiment of the invention;

Figure 9 is a process diagram of a data access phase of the second embodiment;

Figure 10 is a diagram illustrating the data lifecycle in the second embodiment; and

Figure 11 is an access matrix illustrating the various data that may be accessed by actors in the second embodiment of the invention.

Description of the Embodiments

Two embodiments of the invention will now be described. In both the embodiments data is stored in an encrypted form in a network storage facility, by a data owner. In order to allow access to the data by a third party data consumer proxy re-encryption of the data stored in the network storage facility by a trusted authority is performed to convert the data into a form where it can eventually be decrypted by the data consumer, possibly after further decryption and encryption operations, and after possible key provision to the data consumer. However, the protocols of each embodiment are such that without the proxy re-encryption by the trusted authority it would not be possible for the data consumer to decrypt data obtained directly from the network storage facility, even if having been previously provided with a decryption key from a previous operation. This therefore allows for access control to be administered by the trusted authority, and for user access rights to thereby be revoked without the user still being able to access and decrypt to plaintext data stored in the network storage facility.

In more detail, the data stored in the network storage facility is encrypted with one or more layers of encryption, one of which is an asymmetric encryption layer using the public key of the data owner. In order to allow this layer to be removed, the data owner provides a trusted authority with a re-encryption key, to re-encrypt the data so that the data owner public key encryption layer may be removed. The target of the re-encryption may be the requesting data consumer (for example where the data owner public key encryption layer is the only encryption applied to the data) in which case the re-encrypted data may be passed to the data consumer, who then decrypts it with his private key. Alternatively, where more than one encryption layer is used with the data (for example, a symmetric encryption, followed by the data owner public key encryption), then the target of the re-encryption may be the trusted authority itself, wherein the asymmetric public key encryption layer may be removed by the trusted authority by re-encrypting the data using a re-encryption key generated by the data owner for the trusted authority, and then decrypting using the trusted authority's private key. In both cases the data consumer only gets access to the data via the trusted authority, which must undertake the re-encryption, without which the data consumer is unable to access plaintext data.

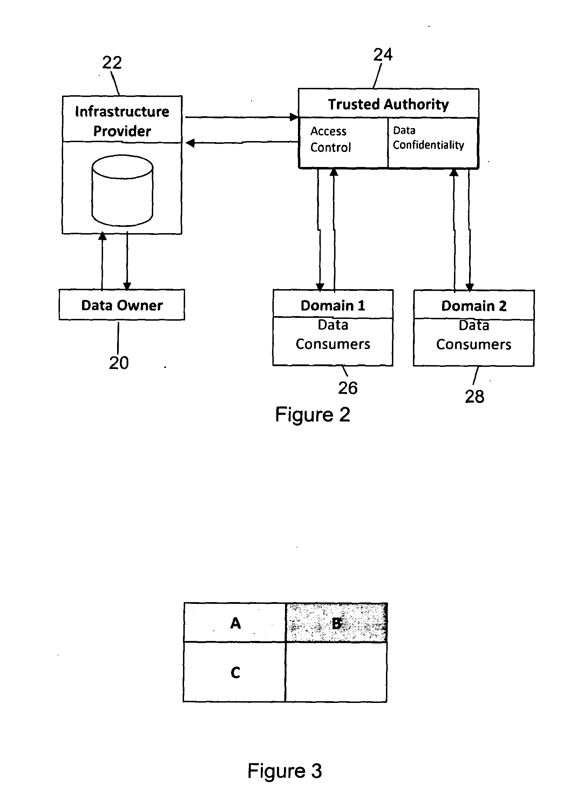

Both embodiments of the invention are based on the same system architecture, shown in Figure 2. The system architecture is composed of the following actors:

• Data Owner (20)

• Data Consumers (26 and 28)

• Infrastructure provider (22)

• Trusted authority (24)

The data owner 20 owns the files stored at the infrastructure provider 22. The data owner 20 is responsible for encrypting these files. The data owner 20 resumes control over the VM or the machine that is hosting the trusted authority 24. By control we mean that the data owner 20 is the only one that has administrative level access over the operating system. The physical infrastructure may be controlled by the provider but as long as the machine that is hosting the trusted authority 24 is not compromised then the scheme is secure. The data owner 20 has full read and write access on the files stored at the infrastructure provider.

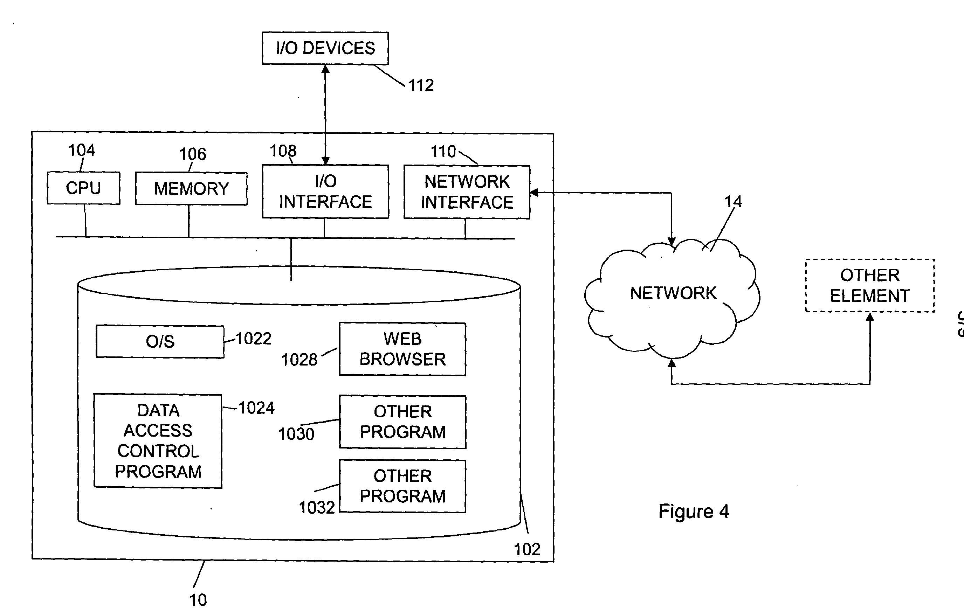

Figure 4 illustrates a typical system configuration of one of the actors in the architecture of the embodiments. In this respect, each "actor" will typically be provided with a processor based communications device, such as a general purpose computer such as a laptop or desktop, or other communications device such as a smartphone, tablet, set-top box, games console, or the like. Within Figure 4 any such processor based communications device 10 is provided with a CPU 104, memory 106, one or more input/output interfaces 108 (such as video and audio output controllers, as well as user input device controllers such as any one or more of a keyboard, touchscreen, or mouse controller, for example) and one or more network interfaces 108 (such as one or more wired or wireless network adapters, for example). In addition is provided a computer readable medium 102 such as a hard disk, flash drive, or other (usually non-volatile) data storage on which is stored the system operating system 1022, as well as a data access control program 1024, that acts to control the system 10 to operate according to the communications and security protocols of the embodiments of the invention, to be described. Also provided is a web browser program 1028, which when run allows the system user to browse the World Wide Web. In this regard, the computer system 10 communicates via the network interface 108 with one or more remote servers or other devices, via a network 14 such as the Internet or an intranet. Other programs 1030 and 1032 for other purposes may of course also reside on the same computer readable medium 102.

As noted, the data access control program 1024 controls the device to operate according to its role in the present architecture as one of the actors, and to implement the security and communications protocols to be described in respect of each of the embodiments. Therefore, where the device is acting as a data consumer then the program 1024 controls the device to perform the actions of a data consumer, to be described. Likewise, when the device is a data owner, or a trusted authority, the program 1024 controls the device to perform the respective actions of each actor, as required. Of course, the program 1024 need not be a single computer program, and may be a suite of programs that work together. Likewise, any device which is participating as an actor need only have those programs or part of a program that cause it to fulfil its necessary actions under the protocols of the embodiments.

In addition to the above, in both embodiments to be described there are seven main security requirements and assumptions involving the following issues: collusion resistance, access control, data channels, data confidentiality, Read/Write requests, trusted authority, and management of keys.

*Collusion resistance:* The scheme should ensure that data consumers should not be able to decrypt the encrypted data even when colluding with the infrastructure provider. Contrary to the assumption made in other schemes [2], [3] and [4], we do not consider that the infrastructure provider is curious but honest because this assumption does not hold in the cloud computing scenario previously presented. In our embodiments the assumption is that the infrastructure provider does not restrict itself for decrypting data or finding information about the access control policies.

*Access Control*: The embodiments ensure that data consumers bearing the correct attributes are able to access the data. Un-authorised data consumers who do not have the right attributes should be prevented from accessing the data. Even if the infrastructure provider colludes with the data consumers they should not be able to access data they are not allowed to read.

*Data Channel*: We assume that all data channels that exist between the actors in the scenario are secured. The network level security is outside the scope of this work.

*Data Confidentiality*: The embodiments should ensure backward and forward secrecy. In backward secrecy any data consumer who accesses files should not be able to decrypt files exchanged in previous communications with another data consumer. In forward secrecy a data consumer should not be able to decrypt files using old credentials to decrypt files exchanged in subsequent communication.

*Read/Write Request*: In the embodiments, we make the assumption that data consumers would only make read requests. Any write request would only be made by the data owner or it would come via the data owner.

*Trusted Authority*: In the embodiments we assume that the trusted authority has considerable computational power available to process requests coming in. The assumption is that there should not be any bottleneck created by the trusted authority by not being able to process incoming requests. We also envision that the trusted authority could reside on the premises of the data owner, or on the premises of the infrastructure provider. As long as the machines on which the trusted authority is running is not compromised then the embodiment is secure.

*Management of Keys*: The mechanism for the exchange of keys between the actors of the scenario is outside the scope of the embodiments. We assume that there is a baseline level of trust that exists between the actors and they are able to exchange the keys and update them appropriately.

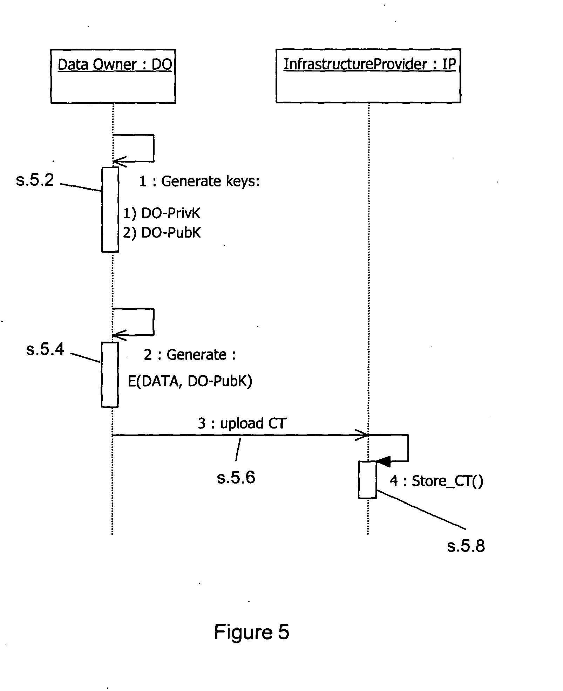

In view of the above, the security and communications protocols according to a first embodiment will now be described with reference to Figures 5 to 7.

The first embodiment comprises two phases, a data storage phase, and a data access phase. The actors of the first embodiment are those described previously with respect to Figure 2 i.e. a data owner, an infrastructure provider, a trusted authority, and a data consumer.

The data storage phase is shown in Figure 5. Here, a data owner at s.5.2 first generates the keys that will be needed, in this case a public-private key pair (DO-PubK, DO-PrivK) for RSA-type asymmetric encryption, for example. Then, at s.5.4 the data owner encrypts the data to be stored with his public key i.e. CT = E(DATA, DO-PubK), and uploads the encrypted data CT to the infrastructure provider, at s.5.6. The infrastructure provider then stores the data at s.5.8. This concludes the data storage phase, which may be repeated as many times as necessary for different files, or different blocks of data. In this respect, however, it is not necessary for the data owner to generate a new public-private key pair per file or data block, and the same key pair may be used for several files or blocks.

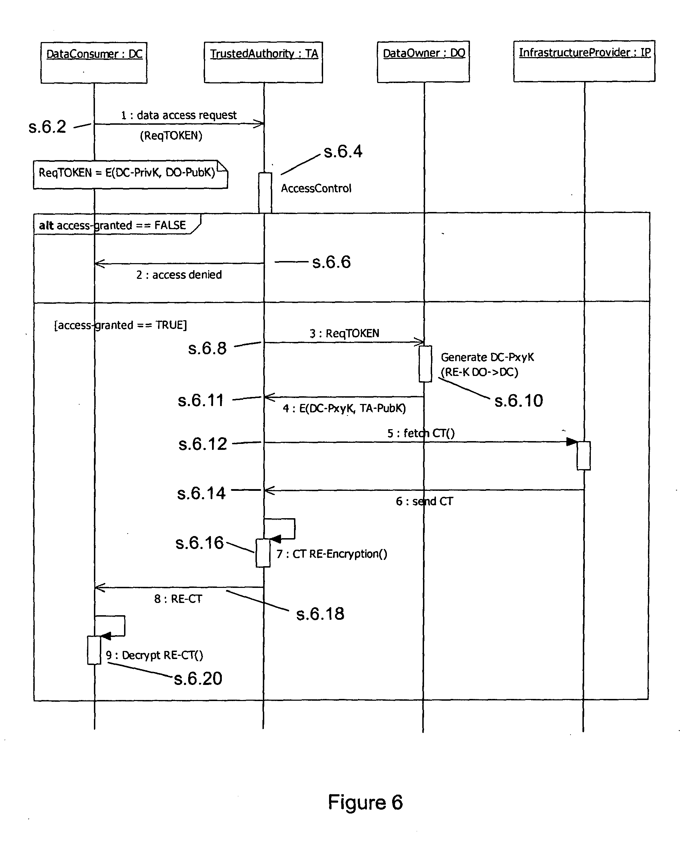

The data access phase is shown in Figure 6. Here, at s.6.2 the data consumer (DC) transmits a data access request to the trusted authority (TA), identifying himself and specifying which data he wishes to access. In addition, in this embodiment the data consumer also passes as part of the data access request a request token, comprising the data consumer's private key encrypted with the data owner's public key. This is required in this embodiment for the data owner (DO) to generate a re-encryption key with the target as the requesting data consumer, as will become apparent below.

The trusted authority (TA) then undertakes an access control procedure at s.6.4, where it determines whether the requesting data consumer (DC) is an authorised person to access the data, for example by consulting a list or other database containing the identities of authorised users. If the trusted authority determines that the data consumer is not authorised then at s.6.6 an "access denied" message is passed back to the requesting data consumer, and the data access phase then ends. However, if the TA determines that the DC has access rights then at s.6.8 the request token received from the DC at s.6.2 is passed to the data owner (DO). The DO then decrypts the request token with his own private key to obtain the DC's private key, and then generates at s.6.10 a proxy re-encryption key DC-PxyK for the data consumer. The re-encryption key DC-PxyK is then encrypted with the TA's public key, and sent to the TA, at s.6.11.

The TA therefore at this point in time has received a request to access a particular data file or block from the DC, and has granted the request. It has also received from the DO a proxy re-encryption key which will be able to re-encrypt data encrypted with the DO's public key into data that can be decrypted with the DC's private key. It therefore remains to access the requested data CT from the infrastructure provider, which is done by a request-response mechanism at s.6.12 and s.6.14. The TA therefore receives CT from the infrastructure provider. Recall that CT is encrypted with the DO's public key.

In order to allow the encryption layer to be removed by the DC, the TA uses the proxy re-encryption key it received from the DO to re-encrypt CT, at s.6.16. After the re-encryption CT remains encrypted, as RE-CT, and hence cannot be read by the TA, or any other actor other than the DC the target of the re-encryption (including malicious eavesdroppers). However, RE-CT can be decrypted by the DC using its private key, and hence at s.6.18 Re-CT is sent by the TA to the DC, where it is then decrypted at s.6.20, using the DC private key. The decryption of RE-CT at the DC ends the data access phase.

In order to define the granularity of protection mechanisms, a so called Access *Matrix* can be used as formalization for the static access permission in any step of interaction between all the entities of our scenario (Data Owner, Infrastructure Provider, Trusted Authority, Data Consumer and a Malicious user).

This simple formalization does not model the rules by which permissions are set in the system, but instead the way each party can access the *data,* taking into consideration the system's access control security policies.

In Figure 3 we introduce a symbolic 3-way representation in order to easily summarize all the information in an access matrix developed from the protocol. The table below explains each block A, B, or C.

| Symbol | Meaning | Values |
|---|---|---|
| A | Can the entity obtain directly this information ? | • "◊" : YES because the entity generates this data<br>• "Y" : YES<br>• "N" : NO |
| B | If the data is encrypted, what is needed to decrypt it ? | One or more keys |
| C | Which info can be decrypted ? | • Data, CT, CT', CT"<br>• "-" : No one because is not possible to access the info in the block B |

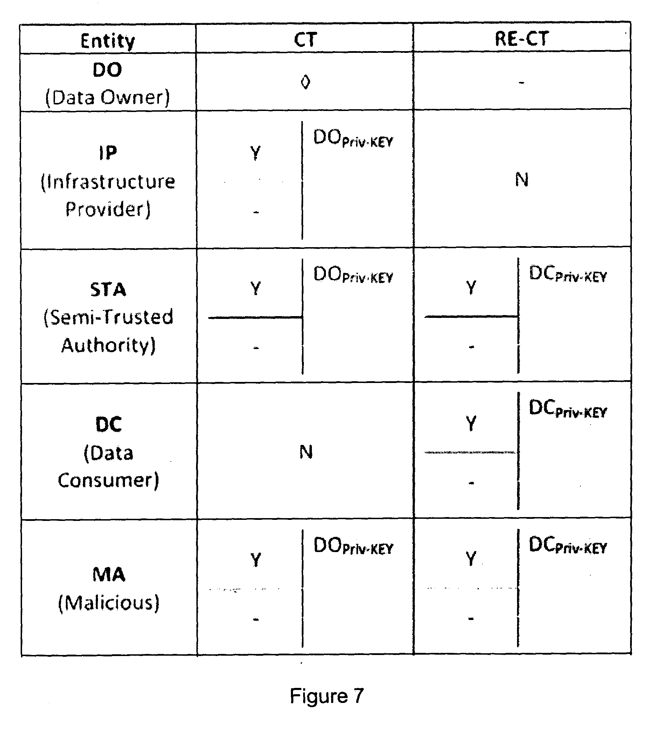

Blocks B and C are optional and appear only if block A is "Y". The access matrix can be organized as follows: shown on the rows are the entities involved in the process, and shown on the columns are each transactional state of the *data.* Each entry therefore contains a 3-way block, or alternatively only its part A. Figure 7 shows the access matrix thus derived for the first embodiment.

From Figure 7 we can see that in order to access CT then the private key of the data owner is always required, whereas for Re-CT the private key of the data consumer is required. Therefore, if a malicious eavesdropper intercepts communications between the parties they will not be able to access any data, as they will have neither private key. Likewise, the data consumer can only ever access re-encrypted data, that has been re-encrypted so as to be decrypted with the data consumer's private key. This allows for user revocation by controlling access rights of users at the trusted authority, in that the trusted authority will only re-encrypt for a user that is authorised. Once authorisation has been lost for a user at the trusted authority, then no re-encryption will occur. Even if the data consumer then colludes with the infrastructure provider to access the data, he will not be able to decrypt the data because the data the infrastructure provider stores i.e.CT requires decryption with the data owner's private key only.

One drawback of the first embodiment as described above is that in s.6.2 the data consumer sends a token in which its private key is encrypted using the public key of the data owner. This token is only forwarded to the data owner if the data consumer is given access permission by the access control mechanism in the TA. However, sharing of the private key is not feasible in many scenarios where the data consumer wants to keep full control over its private keys, although a single purpose private key could be produced for the purpose. In order to get around this issue, therefore, in one variant of the first embodiment where the re-encryption key can be generated from the DC's public key instead of the private key (which is possible in some re-encryption schemes, see Ateniese *et al.* for further details) then instead of the DC sending the request token at s.6.2, during s.6.10 the DO obtains the DC public key from a key server, and uses the DC public key to generate the re-encryption key. Other than these changes, however, the variant would operate the same as described above.

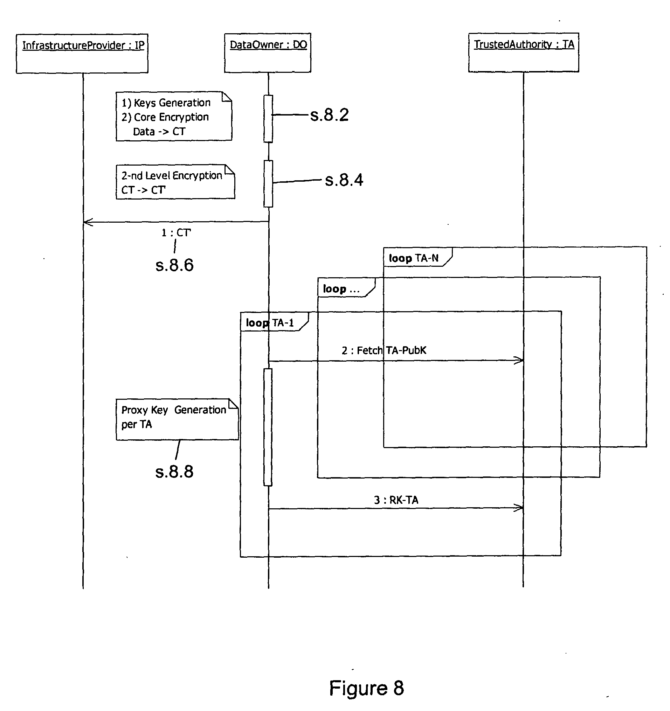

A second embodiment of the invention will now be described, with reference to Figures 8 to 11, which improves upon the above first embodiment in several respects.

Generally as an overview, in the second embodiment the following operations are conducted, and data generated -

**Key generation:**

At the Data Owner the following keys have to be generated:

- $DO_{SK}$: Data Owner Symmetric key

- $DO_{PK}$ : Data Owner Public Key

- $DO_{PR}$ : Data Owner Private Key

At the Trusted Authority, the following keys have to be generated:

- $TA_{PK}$: Trusted Authority Public Key

- $TA_{PR}$: Trusted Authority Private Key

At the Data Consumer, the following keys have to be generated:

- $DC_{PK}$: Data Consumer Public Key

- $DC_{PR}$: Data Consumer Private Key

**Re- encryption key generation:** The data owner also generates a re- encryption key per trusted authority. The data owner uses the $DO_{PR}$ and the $TA_{PK}$ to generate the re- encryption key for each specific trusted authority TA. We use the following symbol for the key

- $RK_{TA}$: Re-encryption key

**Core Encryption:** The core encryption is the process of transforming plain text into cipher text by using the $DO_{SK}$ by the data owner. The cipher text is now called $DO_{SK}$ (Text) .

**Second level encryption:** Second level encryption is done using the $DO_{PK}$ by the data owner. This data can only be decrypted using the $DO_{PR}$ of the data owner, or the delegates' re-encryption keys. After second-level encryption the new cipher text is proxy ready and is also ready to be delegated to the trusted authorities. The cipher text at this stage is called CT'.

**First level encryption:** First level encryption is the process of converting CT' to CT. It includes two sub-processes, firstly the trusted authority uses the re-encryption key $RK_{TA}$ to convert the CT' to CT". Secondly the TA uses the $TA_{PR}$ to convert the CT" to CT.

**Decryption:** Decryption is performed by the data consumer using the symmetric key $DO_{SK}$ that the data owner has provided to it. The key is provided to the data consumer by using its public key $DC_{PK}$ to decrypt the symmetric key $DO_{Sk}$.

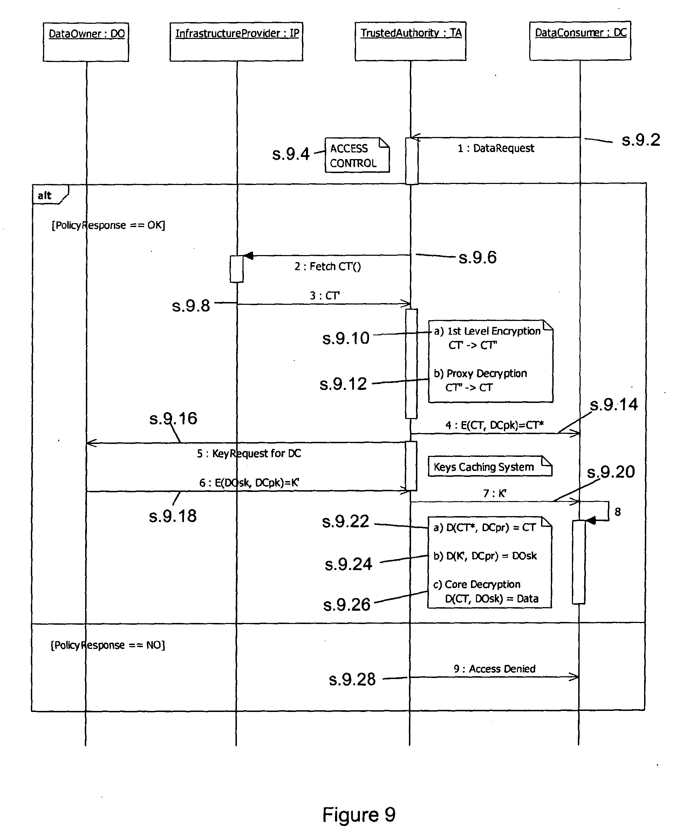

Further details will now be described with respect to Figures 8 and 9. As with the first embodiment, the second embodiment comprises a data storage and setup phase, shown in Figure 8, and a data access phase, shown in Figure 9.

Referring first to Figure 8, the data storage and setup phase comprises firstly, at s. 8.2, the data owner performing core encryption of the data by generating the necessary keys as mentioned above, and then encrypting the data to be stored with a symmetric key i.e. using $DO_{SK}$ (Text) = CT. Then, in the second step at s. 8.4, the DO further encrypts CT with its public key, to apply a second layer of encryption, this second layer being an asymmetric encryption layer, applied using the DO's public key. Hence, CT is transformed into CT' = $DO_{PK}$ ($DO_{SK}$ (Text) ) . At this point, therefore, the data is encapsulated in two layers in encryption, being a symmetric inner layer and an asymmetric outer layer, and is proxy ready. It is therefore sent to and hosted on the infrastructure provider (s. 8.6) . The above steps 8.2 to 8.6 may be repeated as often as necessary for different data files or data blocks that are to be hosted on the infrastructure provided.

Once the data to be stored has been encrypted and sent to the infrastructure provider, in order to complete the data storage and setup phase the data owner then generates a re-encryption key per trusted authority.(TA-1 ... TA-N), and sends the generated re-encryption key to each TA, at s.8.8. The re-encryption key generated for a TA is generated using the TA's public key $TA_{PK}$, and is a function that will re-encrypt the data stored in the infrastructure provider by the data owner so that the outer layer of asymmetric encryption applied to the stored data by the DO may be decrypted and removed by the TA using it's own private key. Each re-encryption key is therefore unique to each TA.

Figure 9 then illustrates the data access phase, comprising the following steps:

1. In the first step (s.9.2) the data consumer makes a request to the trusted authority to access a file.

2. At the trusted authority the access control component performs fine granular access control on the request (s. 9.4). Further details of the access control performed by the TA will be given later.

3. If the access control component gives permission to the request then the trusted authority sends a request to the infrastructure provider to fetch the appropriate file CT' (s.9.6), and this is then returned by the infrastructure provider (s.9.8).

4.

   a) Now the trusted authority data confidentiality component performs re-encryption of the file using the re-encryption key given to it by the data owner, at s.9.10. This will transform the CT' to CT". This is the first level encryption referred to above

   b) Next the data confidentiality component in the TA performs proxy decryption of the re-encrypted file, the proxy decryption removing the outer asymmetric layer of encryption to reveal the symmetrically encrypted inner layer CT i.e. the re-encrypted CT" is decrypted using the TA private key to provide CT (s.9.12).

At this point in time, therefore, based on its decision to allow the DC to access the file the TA has obtained the file and proxy re-encrypted it to itself, and decrypted it to remove the outer asymmetric encryption layer. The (still symmetrically encrypted) file can then be passed to the data consumer, and the symmetric key obtained and passed to the DC using asymmetric encryption techniques, as follows:

5. At s.9.14 the trusted authority encrypts CT using the DC public key and forwards the result CT* to the data consumer.

6. At 9.16 the trusted authority then requests the symmetric key $DO_{SK}$ from the data owner, passing the identity of the data consumer.

7. The data owner receives the request, retrieves $DO_{SK}$, and encrypts $DO_{SK}$ using the DC's public key $DC_{PK}$. The encrypted symmetric key is then sent back to the TA, at s.9.18.

8. After receiving the encrypted symmetric key, the trusted authority forwards the encrypted key K' to the data consumer, at s.9.20. Note that at this point the trusted authority may also cache the requested key for future use, in order to avoid asking the data owner to encrypt multiple times the key for the same data consumer in the future.

9. At the data consumer, the following is then performed

    a) Using $DC_{PR}$ the data consumer decrypts CT* to CT (s.9.22);

    b) Using $DC_{PR}$ the data consumer decrypts K' to $DO_{SK}$ (s.9.24); and

    c) Using $DO_{SK}$ the data consumer then decrypts CT to plain text (s.9.26).

After step 9.26 the data access phase is completed, and the DC is in possession of the plaintext data. On the other hand, if at s.9.4 the access control phase fails, the trusted authority sends an "access denied" signal to the data consumer (s.9.28), and again the data access phase ends.

The formal mathematical representation of the above scheme, based on the Ateniese scheme [1], is given below. The fundamental concept used in developing the Ateniese proxy cryptography scheme is that of bilinear maps.

Let $G_1$, $G_2$, $G_3$ be cyclic groups of the prime order q.

Function e: $G_1 \times G_2 \to G_3$ is a bilinear map if for all $g_1 \in G_1$, $g_2 \in G_2$, a, b $\in$ Z q, that $e(g_1{}^a, g_2{}^b) = e(g_1, g_2)^{ab}$

The algorithm uses bilinear maps of the form of e: $G1 \times G_1 \to G_2$ where $G_1$ = <g>. $e$ must be efficiently computable. Also, e must be non-degenerate; that is <$e$ (g, g) > $\in G_2$

The whole process is composed by a tuple of (possibly probabilistic) polynomial time algorithms KG, RG, $\vec{E}$, R, $\vec{D}$

**Key generation (KG)**

$$<g> = G_1 \text{ of prime order q}$$

$$SK_a = a \in Z_q^* \text{ randomly selected.}$$

$$SK_b = b \in Z_q^*, \text{ randomly selected.}$$

$$PK_b = g^b, PK_a = g^a, \text{ random } r \in Z_q^*$$

$$Z = e(g,g)$$

That means on *input* of a generator g, the KG algorithm *outputs* a couple of tuples $(PK_a, SK_a)$ and $(PK_b, SK_b)$.

**Re-encryption Key generation (RG)**

$$RK_{A->B} = (g^b)^{1/a} = g^{b/a}$$

On *input* of $(PK_a, PK_b)$, the re-encryption key generation algorithm RG*outputs* a key$RK_{A->B}$ for the proxy.

**Encryption**

$$m \in G_2$$

$$C_a = (Z^r \cdot m, g^{ra})$$

On *input* of $PK_a$ and a message $m \in G_2$, for all $E_i \in \vec{E}$ the *output* is a ciphertext$C_a$

**Re-encryption**

$$C_a = (Z^r \cdot m, g^{ra})$$

$$C_b = (Z^r \cdot m, e(g^{ra}, RK_{A->B}))$$

$$= (Z^r \cdot m, e(g^{ra}, g^{b/a}))$$

$$= (Z^r \cdot m, Z^{rb})$$

On input of $RK_{A->B}$ and a ciphertext$C_a$, the re-encryption function R outputs $C_b$.

**Decryption**

**(Alice)**

$$m = \frac{Z^r \cdot m}{e\left(g^{ra}, g^{1/a}\right)} = \frac{Zr \cdot m}{Zr}$$

On input of $SK_a$ and a ciphertext$C_a$ then exists a $D_i \in \vec{D}$ that outputs the message $m \in G_2$

**(Bob)**

$$\frac{Z^r \cdot m}{m = (Z^{rb})^{1/b}}$$

On input of $SK_b$ and a ciphertext $C_b$, then exists a $D_i \in \vec{D}$ that outputs the message $m \in G_2$

More formally, lets key pairs $(PK_a, SK_a)$ and $(PK_b, SK_b)$, generated according KG, belong to parties A and B, respectively, and let $RK_{A->B}$ be generated according to RG. Then, for all messages $m$ in the space $G_2$, the following equations hold with probably one :

$$\forall E_i \in \vec{E}, \exists D_j \in \vec{D}, \qquad D_j(SK_A, E_i(PK_A, m)) = m \text{ for Alice}$$

$$\forall E_i \in \vec{E}, \exists D_j \in \vec{D}, \qquad D_j(SK_B, R(RK_{A \to B}, E_i(PK_A, m))) = m \text{ forBob}$$

In our specific scenario, skipping the key generation process, the encryption and decryption processes that are performed can be summarised as follows:

Core encryption :  $CT = E \, (Data, D0_{SK})$

2nd Level Encryption :  $CT' = E \, (CT, DO_{PK})$

1st Level Encryption :

$$\begin{cases} CT'' = R(CT', RK_{TA}) \\ CT = D\,(CT'', TA_{PR}) \end{cases}$$

Decryption :  $DATA = D\,(CT, D\,(E\,(DO_{SK}, DC_{PK}), DC_{PR}) \,)$

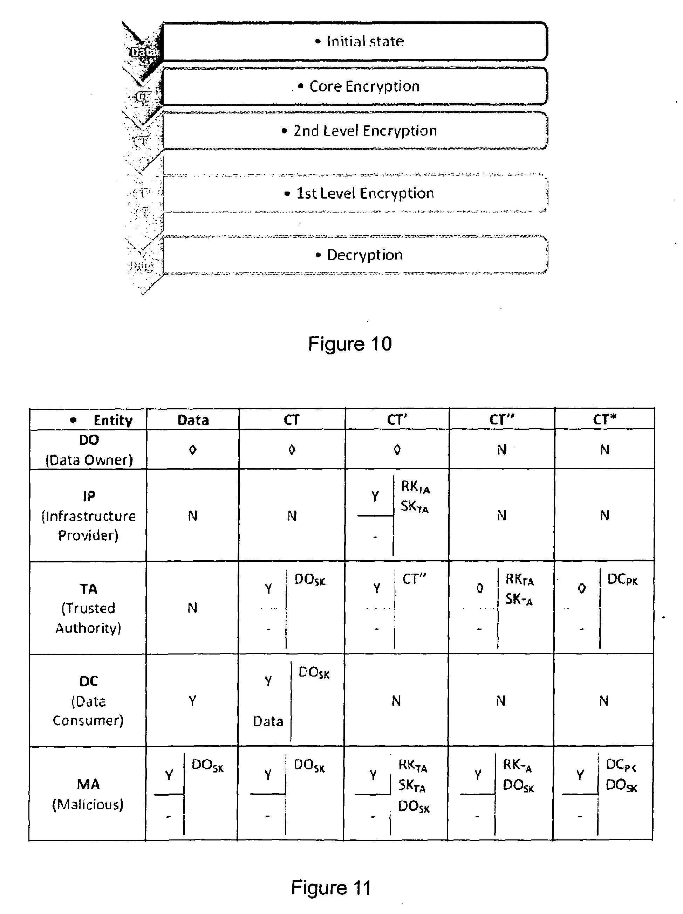

These cryptographic processes can be represented an iterative cascade model to illustrate the data lifecycle, as shown in Figure 10. In each of the states in Figure 10, the *data* is represented by the formal statement described in the table above. In addition, an access matrix for the second embodiment is shown in Figure 11.

From the access matrix of Figure 11, interpreted according to the rules described previously in respect of the matrix of Figure 7 relating to the first embodiment, the following observations may be made:

• The infrastructure provider (IP) can only ever access encrypted data.

• The trusted authority (TA) can only access encrypted data in transition, so it can only perform some crypto functionalities on it, specifically re-encryption and decryption of the outer encryption layer. The TA does not get access to the plaintext DATA.

• The data consumer (DC) can access the plaintext DATA if it possesses the rights to do so, as determined by the access control component of the TA. Access is via the  proxy re-encryption and decryption process performed by the TA, and hence even if the DC colluded with the IP, it would not receive decryptable data to obtain plaintext DATA.

• Regarding any malicious attacker (MA), even if MA eavesdrops on every communications link so that it can access each state of *data,* it is not able to perform any operation in order to obtain the original DATA, due to the layers of symmetric and asymmetric encryption applied to the messages passed between the actors.

Regarding advantages of the second embodiment, and specifically how the embodiment differs from the schemes of the prior art, this approach presents a very practical and scalable solution to the problem of hosting data on an un-trusted infrastructure provider. Our scheme would scale relative to the state of the art schemes [7] [8], as there are no lengthy complex re-encryption and key management operations that need to be performed.

One of the biggest advantages of the scheme is that it requires significantly fewer key exchanges compare to the other schemes [2] [3]. This feature is built into the scheme as it only requires that the data owner and trusted authority initially have a baseline level of trust so that their public keys can be shared. Afterwards each domain that uses the trusted authority would provide the public keys of its data consumers itself. There are no requirements for distributing session or private keys.

Caching of frequently accessed files at the domain level would be used to ensure that less network level resources are used when a request comes in. If a request for the same file comes in from a different user all the domain administrator has to do is to forward the file to the user. It then notifies the data owner to release the key for the decryption of the file to the data consumer.

Furthermore, the scheme can be used in a setting where decryption is performed not at the data consumer level but at the domain level. For instance, Company A wants all the data to be re- encrypted using its private key, and when Company A receives a file on behalf of a data consumer, it then performs decryption and forwards it to the respective data consumer. The benefit of this approach would be that caching of files would not require provisioning of the keys by the data owner or decryption of the files, as if the request for the same file comes in, then all the domain administrator has to do is to forward that file to the appropriate data consumer without performing decryption.

One of the benefits of embodiments of the invention are that they provide for effective new user join and user revocation processes, in that new users can be granted access rights, and old users may have their access rights revoked. Further details of the implementation of these aspects are described next, which are applicable to either embodiment already described.

**New User Join:** Every time a new data consumer wants to access files stored on the infrastructure provider it has to first request the administrator of the domain. The domain administrator then ensures that the trusted authority has access to appropriate credentials of the data consumer. In this respect the domain administrator provides a web based query service that provides appropriate credentials (such as, for example, Attributes and a Public key relating to an identity) of the data consumer to the trusted authority. The trusted authority uses this service to check the credentials of data owners who want to access files. The web-based query service can be an LDAP server or an active directory server. The following is example pseudo code of the new user join operation:

//Following function is called by the data consumer to initiate the process of user join

**NewUserJoin(Name, EmployeeNumber)**

```
{
If (Name is in LDAPDirectory() and EmployeeNumber is in the EmployeeDirectory() )
Then
{
getAttributes (Name, EmployeeNumber)
getPublicKey(Name, EmployeeNumber)
UpdateDirectoryService(Attributes, PublicKey)
//Updating Directory service that the trusted authority queries
}
Else {(Return (Wrong Name or Wrong Employee Number) }
}
```

// Following function is called by the trusted authority
/ * In the function "TAName" represents the name of the entity that is calling the function, such as a domain administrator, data owner or trusted authority. "Authentication" is the process by which an entity authenticates itself to the directory service, and "DCName" is the name of the data consumer in respect of which the query is about. */

**DirectoryService(TAName,Authentication,DCName)**

```
{
If(Authentication Fails)
Then {Return (Authentication Failed) }
Else
{
If(DCName is in LDAPDirectory)
Return (Attributes, PublicKey)
Else {Return (WrongDCName) }
}
}
```

**User Revocation:** The process of user revocation is initiated by the administrator of the domain. It notifies the trusted authority that the data consumer should no longer have access rights to access files on the infrastructure provider. The trusted authority then deletes the attributes and public key of the data consumer from its records.

The domain administrator also ensures that the web based directory service no longer holds the credentials of the data consumer. Once these operations are complete then the data consumer access is revoked and he no longer can decrypt files stored at the infrastructure provider. The following is the pseudo code for the user revocation process:

/* The following function is called by the domain administrator to delete credentials from the web based directory service. */

**DirectoryService(Name, Authentication,DCName)**

```
{
If(Authentication Fails)
{Return (Authentication Failed) }
Else
{
//Following function deletes credentials of the data consumer from the directory
deleteCredential(DCName)
}
}
/* The following function is called by the trusted authority to delete the data consumer
attributes and public key from its records. */
```

**UpdateRecords (DCName, Delete)**

```
{
If (DCName is in Direcotory.Name()  )
Then
{
deleteAttributes (DCName)
deletePublicKey(DCName)
}
Else { Return (Incorrect DCName)  }
}
```

We turn now to consider the access control part of embodiments of the invention in more detail, as it represents an important advantage over the prior art. In this respect, state of the art schemes typically use attributes to perform fine granular access control. In particular prior art schemes achieve fine granularity by encrypting the files using keys that have attributes embedded in them. Only the data consumers who have the correct key with the appropriate attributes are able to decrypt the files [2] [8].

Such an approach is cumbersome and it requires user specific encryption to be performed per file. In embodiments of the invention we have delinked the fine granularity of access control from data confidentiality. This approach has enabled the embodiments to perform fine granular access control at the trusted authority level. The biggest benefit of such an approach is that it is less complex (in terms of computational overhead, and processing time).

In embodiments of the invention a centralised access control mechanism is used in which a fine granular access control policy is defined with respect to a domain. This approach enables us to update the access control policy, without having to re-encrypt all the files. Every domain represents an enterprise or collaboration, for example, and when a domain has specific requirements with regards to access control, then using our mechanism it becomes possible to define rich access control policies.

The mechanism used in embodiments of the invention is preferably based on extensible Access Control Mark-up Language (XACML) [5], which is an access control policy framework based on three aspects.

Firstly it offers a policy language that can be used to express control rules and conditions. Each policy constitutes multiple rules and policies can be combined into sets. The XACML policies thus offer a mechanism that is able to represent the governance framework of an organisation (domain).

Secondly XACML offers a protocol to represent the request and response. Real world access control requests can be constructed using the protocol. These requests than go to an XACML engine for evaluation and the result is then returned, which is normally "permit", "deny" or "in-applicable".

The third feature that XACML offers is a reference architecture that proposes software modules to be deployed to ensure efficient implementation of security policies. The modules include: Policy Decision Point (PDP), that evaluates policies against access requests; Policy Enforcement Point (PEP), which is responsible for providing the access requests; and finally the Policy Information Point (PIP), that is queried by PDP and PEP to gather information about subjects and the objects.

The advantage of using XACML is manifold, in that it offers a standardised approach to authorisation by which many different domains can be integrated without a lot of hassle, and the focus is on the security policies rather than technicalities of the environment. Furthermore, XACML follows an attribute and policy based approach which makes it fine granular.

The present embodiments preferably achieve fine granular access control using XACML, but usage of meta-files in such a scheme has a major drawback. The meta-files are not encrypted and they can be potentially read by the infrastructure provider. The infrastructure provider can learn some information about which files are accessed but it cannot learn anything about the encrypted files themselves. Furthermore, the kind of information that is revealed also depends upon the scenario and on the data consumer. A potential solution to this problem can be the use of abbreviation rather than text in the meta-files, as such would limit the learning capacity of the infrastructure provider. An implication of such an "abbreviated" approach would be that the access control mechanism has to know which abbreviation means what in advance in order to interpret them.

Of course, in other embodiments of the invention other access control schemes may be implemented, other than XACML-based schemes. In the context of embodiments of the invention, the important point is that it is the trusted authority that communicates with an access control component (which may be part of the TA) that decides whether a requesting data consumer should be granted access, and that there are readily available mechanisms to update user access lists to grant and revoke user access rights. The trusted authority, when learning of or determining that a user has been granted access then takes steps to proxy re-encrypt the data to be accessed so that the data may then be subsequently successfully decrypted by the data consumer in due course.

In view of the above description of embodiments of the invention it should be apparent that embodiments of the invention provide several advantages. One such advantage is that user revocation is independent of data re-encryption by using proxy re-encryption to perform on-the-fly re-encryption. This reduces the computational overhead and simplifies the process of user revocation. The process of user revocation ensures that the data consumer who has its access revoked cannot decrypt any information hosted on the infrastructure provider even if both of them collude. Furthermore, the scheme ensures forward and backward secrecy even when a large number of revoked data consumers and infrastructure providers collude together.

The trusted authority represents a single point of failure for the whole scheme. In case the trusted authority goes down then the whole scheme of embodiments of the invention would no longer function. One potential solution to the problem is that the data owner ensures that a backup of the trusted authority is made so that in case the data relating to security policies and keys on a trusted authority is lost, it can be recovered. Furthermore, the data owner should also ensure that back up servers come online in case the main server is not working. The use of multiple trusted authorities, such as used in the second embodiment, also addresses this issue.

One significant advantage of embodiments of the invention is that a data owner is able to deploy fine granular access control policies which are independent of data confidentiality. This ensures that rich policies are developed with focus on corporate governance rather than on the technicalities of cryptography and software. This setting is very suitable to the cloud computing scenarios as there would be many enterprises (domains) that would be using the cloud while acting as both data owner and data consumer.

Various further modifications, whether by addition, substitution or deletion, will be apparent to the intended reader, being a person skilled in the art, any and all such modifications being intended to be encompassed by the appended claims.

References

[1] G. Ateniese, K. Fu, M. Green, and S. Hohenberger, "Improved proxyre-encryption schemes with applications to secure distributed storage,"in Proc. of NDSS'05, 2005.

[2] L. Ibraimi, M. Petkovic, S. Nikova, P. Hartel and W. Jonker, "Mediated Ciphertext-Policy Attribute Based Encryption and its Application" Proc. Intl' Workshop Information Security Aplications (WISA '09), pp.309-323, 2009

[3] S. Yu, C. Wang, K. Ren and W. Lou, "Attribute Based Data Sharing with Attribute Revocation", Proc ACM Sym. Information, Computer and Comm. Security (ASIACCS '10), 2010.

[4] S. D. C. di Vimercati, S. Foresti, S. Jajodia, S. Parabochi and P. Samarati, "Over Encryption Management of access control evolution on outsourced data" in Proc. Of VLDB '07, 2007.

[5] Oasis XACML, Available at: hftp://www.oasis-open-org/committees/xacml/

[6] 104th United States Congress, "Health Insurance Portability and Accountability Act of 1996 (HIPPA)," Online at http://aspe.hhs.gov/admnsimp/pl104191.htm, 1996.

[7] A. Sahai and B. Waters. Fuzzy Identity Based Encryption. In Advances in Cryptology Eurocrypt, volume 3494 of LNCS, pages 457-473. Springer, 2005.

[8] V. Goyal, O. Pandey, A. Sahai, and B. Waters. Attribute Based Encryption for Fine-Grained Access Conrol of Encrypted Data. In ACM conference on Computer and Communications Security (ACM CCS), 2006.

[9] M. Blaze, G. Bleumer, and M. Strauss, "Divertible protocols and atomic proxy cryptography," in Proc. of EUROCRYPT '98, 1998

**Claims**

1. A method for use in accessing data associated with a data owner from network data storage, the data being encrypted with one or more layers of encryption including a first encryption layer applied by the data owner, the method comprising:

    obtaining a proxy re-encryption key generated by the data owner; and
    if it is determined that a data consumer, that has requested access to data stored in the network data storage, may access the requested data, obtaining the requested data from the network data storage and proxy re-encrypting the data to enable subsequent decryption of the first encryption layer applied by the data owner whereby to enable eventual access to the data.

2. A method according to claim 1, wherein the re-encryption key re-encrypts the data so that the first encryption layer may be decrypted by the data consumer, the method further comprising sending the re-encrypted data to the data consumer.

3. A method according to claim 2, wherein the data has a single layer of encryption being the first layer, wherein the data consumer is able to decrypt the re-encrypted data to plaintext data to access the data.

4. A method according to claim 1, wherein the re-encryption key re-encrypts the data so that the first encryption layer may be decrypted by a trusted authority, the method further comprising, at the trusted authority, decrypting the first encryption layer.

5. A method according to claim 4, wherein the data has at least two layers of encryption, being one or more other layers and the first layer, the decryption resulting in the data encrypted with the one or more other layers.

6. A method according to claims 4 or 5, and further comprising sending the proxy decrypted data to the data consumer, the data consumer then obtaining the decryption key to decrypt the one or more other layers to obtain plaintext data from the data owner.

7. A method according to claim 6, wherein the trusted authority requests the decryption key to decrypt the one or more other layers from the data owner, and forwards the decryption key to the data consumer.

8. A method for use in storing data in network data storage, the method comprising:

encrypting data to be stored in the network data storage with one or more layers of encryption, including at least a first encryption layer;
storing the encrypted data in the network data storage;
generating a proxy re-encryption key to allow a trusted authority to re-encrypt data encrypted with the first encryption layer so that the first encryption layer may be decrypted by a third party; and
sending the proxy re-encryption key to the trusted authority.

9. A method according to claim 8, wherein the re-encryption key is generated so as to be able to re-encrypt the data such that the first encryption layer may be decrypted by the data consumer.

10. A method according to claim 9, wherein the data has a single layer of encryption being the first layer, wherein the data consumer is able to decrypt the re-encrypted data to plaintext data to access the data.

11. A method according to claim 8, wherein the re-encryption key re-encrypts the data so that the first encryption layer may be decrypted by the trusted authority.

12. A method according to claim 10, wherein the data has at least two layers of encryption, being one or more other layers and the first layer, the method further comprising, receiving a request for the decryption key or keys for the one or more other layers, and sending the keys in response to the request.

13. A computer program or suite of computer programs so arranged such that when executed by a computer system it/they cause(s) the computer system to operate in accordance with the method of any of the preceding claims.

14. A computer readable medium storing a computer program or at least one of a suite of computer programs according to claim 13.

15. A system, comprising:

at least one processor;
memory; and
at least one computer readable medium storing a computer program or suite of computer programs so arranged such that when loaded into memory and executed by the processor they cause the system to operate in accordance with the method of any of claims 1 to 12.

Figure 1 (Prior Art)

Figure 2

Figure 3

I/O DEVICES

112

104    106    108    110

CPU    MEMORY    I/O INTERFACE    NETWORK INTERFACE

14

NETWORK

OTHER ELEMENT

O/S —1022    1028— WEB BROWSER

DATA ACCESS CONTROL PROGRAM —1024    1030— OTHER PROGRAM

OTHER PROGRAM

1032

102

10

Figure 4

| Data Owner : DO | InfrastructureProvider : IP |

s.5.2 — 1 : Generate keys:

1) DO-PrivK
2) DO-PubK

s.5.4 — 2 : Generate :

E(DATA, DO-PubK)

3 : upload CT

s.5.6

4 : Store_CT()

s.5.8

Figure 5

Figure 6

| Entity | CT | | RE-CT | |
|---|---|---|---|---|
| **DO**<br>(Data Owner) | ◊ | | - | |
| **IP**<br>(Infrastructure Provider) | Y<br>-<br> | $DO_{Priv\text{-}KEY}$ | N | |
| **STA**<br>(Semi-Trusted Authority) | Y<br>- | $DO_{Priv\text{-}KEY}$ | Y<br>- | $DC_{Priv\text{-}KEY}$ |
| **DC**<br>(Data Consumer) | N | | Y<br>- | $DC_{Priv\text{-}KEY}$ |
| **MA**<br>(Malicious) | Y<br>- | $DO_{Priv\text{-}KEY}$ | Y<br>- | $DC_{Priv\text{-}KEY}$ |

Figure 7

Figure 8

Figure 9

- Initial state
- Core Encryption
- 2nd Level Encryption
- 1st Level Encryption
- Decryption

Figure 10

| • Entity | Data | CT | CT' | CT'' | CT* |
|---|---|---|---|---|---|
| **DO**<br>(Data Owner) | ◊ | ◊ | ◊ | N | N |
| **IP**<br>(Infrastructure Provider) | N | N | Y $\mid$ RK$_{IA}$<br>SK$_{TA}$<br>- $\mid$ | N | N |
| **TA**<br>(Trusted Authority) | N | Y $\mid$ DO$_{SK}$<br>- $\mid$ | Y $\mid$ CT''<br>- $\mid$ | ◊ $\mid$ RK$_{TA}$<br>SK$_{TA}$<br>- $\mid$ | ◊ $\mid$ DC$_{PK}$<br>- $\mid$ |
| **DC**<br>(Data Consumer) | Y | Y $\mid$ DO$_{SK}$<br>Data $\mid$ | N | N | N |
| **MA**<br>(Malicious) | Y $\mid$ DO$_{SK}$<br>- $\mid$ | Y $\mid$ DO$_{SK}$<br>- $\mid$ | Y $\mid$ RK$_{TA}$<br>SK$_{TA}$<br>DO$_{SK}$<br>- $\mid$ | Y $\mid$ RK$_{-A}$<br>DO$_{SK}$<br>- $\mid$ | Y $\mid$ DC$_{PK}$<br>DO$_{SK}$<br>- $\mid$ |

Figure 11

Europäisches
Patentamt
European
Patent Office
Office européen
des brevets

# EUROPEAN SEARCH REPORT

Application Number

EP 12 25 0082

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/170701 A1 (MATSUO TOSHIHIKO [JP] ET AL) 17 July 2008 (2008-07-17) <br> * abstract * <br> * paragraph [0006] - paragraph [0011] * <br> * figures 3-6 * <br> ----- | 1-15 | INV. <br> H04L9/08 <br> H04L9/30 |
| A | TOSHIHIKO MATSUO ED - TSUYOSHI TAKAGI ET AL: "Proxy Re-encryption Systems for Identity-Based Encryption", 2 July 2007 (2007-07-02), PAIRING-BASED CRYPTOGRAPHY Â PAIRING 2007; [LECTURE NOTES IN COMPUTER SCIENCE], SPRINGER BERLIN HEIDELBERG, BERLIN, HEIDELBERG, PAGE(S) 247 - 267, XP019096363, ISBN: 978-3-540-73488-8 <br> * Abstract <br> Section 1 * <br> ----- | 1-15 | |
| A,D | ATENIESE G ET AL: "IMPROVED PROXY RE-ENCRYPTION SCHEMES WITH APPLICATIONS TO SECURE DISTRIBUTED STORAGE", ACM TRANSACTIONS ON INFORMATION AND SYSTEM SECURITY, ACM, NEW YORK, NY, US, vol. 9, no. 1, 1 February 2006 (2006-02-01), pages 1-30, XP001242926, ISSN: 1094-9224, DOI: 10.1145/1127345.1127346 <br> * abstract * <br> * Section 1 <br> Section 4 * <br> ----- | 1-15 | TECHNICAL FIELDS SEARCHED (IPC) <br><br> H04L |

The present search report has been drawn up for all claims

| Place of search | Date of completion of the search | Examiner |
|---|---|---|
| Munich | 10 October 2012 | Bertolissi, Edy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

# EP 2 645 618 A1

## ANNEX TO THE EUROPEAN SEARCH REPORT
## ON EUROPEAN PATENT APPLICATION NO.

EP 12 25 0082

This annex lists the patent family members relating to the patent documents cited in  the above-mentioned European search report.
The members are as contained in the European Patent Office EDP file on
The European Patent Office is in no way liable for these particulars which are merely given for the purpose of information.

10-10-2012

| Patent document cited in search report | Publication date | Patent family member(s) | Publication date |
|---|---|---|---|
| US 2008170701 A1 | 17-07-2008 | JP 2008054315 A | 06-03-2008 |
| | | US 2008170701 A1 | 17-07-2008 |

EPO FORM P0459

For more details about this annex : see Official Journal of the European Patent Office, No. 12/82

29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. ATENIESE ; K. FU ; M. GREEN ; S. HOHEN-BERGER.** Improved proxyre-encryption schemes with applications to secure distributed storage. *Proc. of NDSS'05,* 2005
- **L. IBRAIMI ; M. PETKOVIC ; S. NIKOVA ; P. HARTEL ; W. JONKER.** Mediated Ciphertext-Policy Attribute Based Encryption and its Application. *Proc. Intl' Workshop Information Security Aplications (WISA '09,* 2009, 309-323
- **S. YU ; C. WANG ; K. REN ; W. LOU.** Attribute Based Data Sharing with Attribute Revocation. *Proc ACM Sym. Information, Computer and Comm. Security (ASIACCS '10,* 2010
- **S. D. C. DI VIMERCATI ; S. FORESTI ; S. JAJODIA ; S. PARABOCHI ; P. SAMARATI.** Over Encryption Management of access control evolution on out-sourced data. *Proc. Of VLDB '07,* 2007

- *Health Insurance Portability and Accountability Act of 1996 (HIPPA,* 1996
- Fuzzy Identity Based Encryption. **A. SAHAI ; B. WATERS.** Advances in Cryptology Eurocrypt. Springer, 2005, vol. 3494, 457-473
- **V. GOYAL ; O. PANDEY ; A. SAHAI ; B. WATERS.** Attribute Based Encryption for Fine-Grained Access Conrol of Encrypted Data. *ACM conference on Computer and Communications Security (ACM CCS,* 2006
- **M. BLAZE ; G. BLEUMER ; M. STRAUSS.** Divertible protocols and atomic proxy cryptography. *Proc. of EUROCRYPT '98,* 1998